(19) Europäisches Patentamt
European Patent Office
Office européen des brevets

(11) **EP 3 757 425 B1**

(12) **EUROPEAN PATENT SPECIFICATION**

(45) Date of publication and mention
of the grant of the patent:
**11.05.2022 Bulletin 2022/19**

(21) Application number: **20163381.5**

(22) Date of filing: **16.03.2020**

(51) International Patent Classification (IPC):
**F16H 3/12** *(2006.01)*    **F16H 1/08** *(2006.01)*
**F16D 3/10** *(2006.01)*    **B63H 20/20** *(2006.01)*

(52) Cooperative Patent Classification (CPC):
**F16H 3/14; B63H 20/20; F16H 3/145; F16H 61/04;**
F16H 2061/0474

(54) **TRANSMISSION ELEMENT AND GEAR BOX FOR A POWER TRANSMISSION SYSTEM**

ÜBERTRAGUNGSELEMENT UND GETRIEBE FÜR EIN KRAFTÜBERTRAGUNGSSYSTEM

ÉLÉMENT DE TRANSMISSION ET BOÎTE DE VITESSES POUR UN SYSTÈME DE TRANSMISSION DE PUISSANCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.06.2019 EP 19000310**
**25.11.2019 EP 19211247**
**27.12.2019 US 201916727963**
**18.12.2019 US 202016718376**
**31.01.2020 US 202016779024**

(43) Date of publication of application:
**30.12.2020 Bulletin 2020/53**

(73) Proprietors:
• **Kontopoulos, Leonidas Kyros**
**60596 Frankfurt am Main (DE)**
• **Kontopoulos, Kyros Filippos**
**60596 Frankfurt am Main (DE)**
• **Kontopoulos, Konstantinos**
**60596 Frankfurt am Main (DE)**

(72) Inventors:
• **Kontopoulos, Konstantinos**
**60596 Frankfurt am Main (DE)**
• **Kontopoulos, Grigorios Maximilian**
**60596 Frankfurt am Main (DE)**

(74) Representative: **Keil & Schaafhausen**
**Patentanwälte PartGmbB**
**Friedrichstraße 2-6**
**60323 Frankfurt am Main (DE)**

(56) References cited:
**EP-A1- 3 025 072**    **EP-A1- 3 660 352**
**EP-B1- 3 025 072**    **WO-A1-2006/089316**
**CN-B- 101 463 877**

**Description**

The present invention is generally directed to a transmission element, a gearbox and a power transmission system suitable to be used e.g. in a marine engine or in an automobile. Such a transmission element may comprise at least one first part, at least one second part which is rotatable relative to the at least one first part about a common axis by a limited degree, and at least one first elastic element, wherein the at least one first part and the at least one second part together form at least one compartment in which the at least one first elastic element is arranged between the at least one first part and the at least one second part to bias the at least one first part and the at least one second part rotationally away from each other in opposite directions.

Transmission elements such as gear wheels or dog clutches are well known and used in gearboxes for example of automobiles as well as of motor boats. During gear changing the gears are constantly rotating such that high wear and tear forces act on the gearbox components while shifting from one gear to another, i.e. when a dog clutch locks different gears to the rotating shafts. Such forces are commonly limited by using synchronizing mechanism that match the speed of the gear to that of the shaft.

Therefore, a short pause is often required, for example between changing from forward to reverse gear of a motorboat. During this pause, i.e. the neutral stage, the power source is disengaged from the transmission. Thus, the speed of the engine more closely matches the speed of the new gear and torque spikes are reduced when the engine is re-engaged to the transmission.

Further, to allow a quicker and smoother shifting, elastic elements are arranged within power transmission systems especially gearboxes to absorb the impact on the components during shifting processes. This can reduce unwanted noises and provide the user with a higher quality shifting feel, as well as increasing the lifetime of the transmission.

Damping mechanisms arranged to damp the locking between the gear elements are known in the prior art. WO 2008/062192 A1 discloses a damping system to absorb the energy in torque spikes generated during locking of a gear element to a shaft. Therefore, the damping system uses resilient means such as rubber blocks or springs arranged in series within an inner and outer part of a gear wheel.

Further, WO 2015/010187 A1 discloses a pulley comprising two springs for damping vibrations of a crankshaft. In addition, EP 3 660 352 A1 (not being published at the time of filing) shows a divided gear wheel with similar features as those of the present invention, wherein, however, the elastic elements housed inside the gear wheel are not preloaded.

As all elastic elements can only withstand a maximum load, determined by the suspension rate, without being damaged, elastic elements are often selected according to the maximum load, the so-called critical load. Hence, the elastic element only becomes "active", i.e. is being compressed or extended, when sufficient load is applied.

Therefore, the object of the present invention is to provide a transmission element of a gearbox that allows a smooth gear changing, e.g. when the selector engages the shaft with the gear wheel, while simultaneously absorbing maximum shocks. Especially, it is an object of the present invention to develop a system with minimum constructive and cost expenditures. It is a further object to provide an improved gearbox and an improved transmission system suitable, e.g. for use in maritime or automotive drive trains.

This object is solved by a transmission element for use in a gearbox according to claim 1 and a gearbox according to claim 7.

A transmission element of a power transmission system according to the present invention comprises at least one first part and at least one second part which is rotatable relative to the at least one first part about a common axis by a limited degree. Further, the transmission element comprises at least one first elastically deformable element (first elastic element). The elastic element is arranged between the at least one first part and the at least one second part in at least one compartment formed by the at least one first part and the at least one second part, wherein the elastic element biases the at least one first part and the at least one second part rotationally away from each other in opposite directions. The transmission element further comprises at least one second elastically deformable element (second elastic element) arranged within the at least one compartment between the at least one first part and the at least one second part, wherein the at least one second elastic element is arranged parallel to the at least one first elastic element, and in that the elastic elements comprise different suspension rates. Furthermore, the first elastic element of the transmission element comprises a lower suspension rate than the second elastic element and the at least one first elastic element of the transmission element is partially arranged within the at least one second elastic element. Thus, the at least one first elastic element is protruding from the at least one second elastic element and can therefore be independently deformed. In addition, the first elastic element, i.e. the elastic element with the lowest suspension rate, is preloaded.

The transmission element may be a divided gear wheel or a selector, e.g. a dog clutch type selector. Typically, the transmission elements form more than one compartment. Each compartment then comprises at least one and may also comprise two elastic elements. Regardless of whether one compartment comprises one or two elastic elements, the elastic elements are always arranged parallel to each other even when they are arranged in separate compartments. Preferably, the elastic elements in each compartment are held by supports. The parts, i.e. the at least one first and the at least one second part, may be arranged within each other. In addition, the first part may form the inner and the second part may form the outer part. The use of several elastic elements makes it possible to select one elastic element according to the lowest occurring load, and one elastic element according to the highest occurring load. As a result, a smooth shifting process is guaranteed by a direct response of an elastic element. In case of multiple compartments (each may comprise at least one first and at least one second elastic element), the compartments are evenly arranged circumferentially. Using multiple compartments comprising elastic elements may reduce the maximum deflection angle and thus the available engagement time. Preferably, the compartments are closed. Still further, in a different embodiment, the compartments may be open for heat exchange and facilitate maintenance of the elastic elements.

In a preferred embodiment the at least one second elastic element biases the at least one first part and the at least one second part rotationally away from each other in opposite directions after the at least one first elastic element is loaded. Thus, the at least one second part only becomes "active", i.e. is being loaded, after the at least one first elastic element has been deformed to a certain degree.

In one embodiment, if multiple elastic elements are used, the first elastic element comprises the lowest and the last elastic element, i.e. the second elastic element, comprises the highest suspension rate. The elastic elements in between the frist and the last eleastic element have an ascending suspension rate, wherein the next elastic element after the first elastic element would have a higher suspension rate than the first elastic element and a lower suspension rate than the following elastic element. Further, the suspension rate of the elastic element with the highest suspension rate, i.e. the second elastic element, may be adopted to the maximum torque provided by the motor. Nevertheless, if the transmission element comprises multiple first and/or second elastic elements, those first elastic elements comprise the same suspension rates and those second elastic elements comprise the same suspension rates, wherein the suspension rates of the first elastic elements differ from the suspension rates of the second elastic elements.

However, independent of the exact arrangement of the elastic elements it can be said that the elastic element with the lowest suspension rate is more responsible for a soft and smooth engagement of the transmission elements, wherein the elastic element with the highest suspension rate is more responsible for power transmission. The elastic element with the smaller suspension rate may only handle less than 0.5% of the maximum occurring load. Thus, due to the existence of elastic elements with very low and high suspension rates, the engagement of the transmission elements with another transmission element is achieved by the elastic elements with low suspension rates, wherein the stiffer elastic elements, i.e. the elastic elements with higher suspension rates, transfer the significant load. For the engagement of two transmission elements, e.g. the engagement of a gear wheel and a selector, it is not mandatory that both transmission elements comprise elastic elements and/or are designed according to the invention.

In one embodiment, if there are multiple elastic elements arranged within one compartment, the first elastic element has the greatest length and the last spring element has the smallest length. The spring elements arranged between the first and the last spring element have a longer length one after the other, so that the second spring element would be the second longest spring element and thus longer than the last and shorter than the first. There may also be compartments comprising at least two elastic elements that are not partially arranged within each other even though they are arranged in the same compartment. In addition, the elastic elements may be held by supports, wherein the supports may comprise at least one recess. If the elastic elements are not arranged within each other, one elastic element may be held by the first part of the support, wherein additional elastic elements may be held by the recessed part of the support.

If the elastic elements are partially arranged within each other, the length of the first elastic element protruding from the second spring element can be used to determine the load at which the second elastic element becomes active. Obviously, the at least one first elastic element can also enclose the at least one second elastic element and thus the second elastic element is arranged within the at least one first elastic element.

In a preferred embodiment, the at least one first and the at least one second elastic elements are spring elements. Alternatively, the at least one first elastic element may be provided by a spring element and the at least one second elastic element may be provided by a rubber element such as a rubber block. Regardless of which elastic element is used, the elastic elements always comprise different suspension rates as described above. Of course, the invention also includes an interchange of possible arrangements of elastic elements, the use of alternative elastic means as well as the use of different lengths of elastic elements in alternative sequences.

According to a preferred embodiment of the present invention, when the elastic element comprises a spring arranged within a divided gear wheel, for example a torsional spring, the spring is preloaded so that:

$$T_{pre} \geq J * \omega_{max} + T_f.$$

Where $T_{pre}$ is the preloaded torque of the spring, J is the moment of inertia of the inner part of the divided gear wheel, i.e. the first part of the divided gear wheel, $\omega_{max}$ is the maximum angular acceleration/deceleration that can be achieved by the inner part of the divided bevel gear and $T_f$ is the torque created by friction forces between the inner part and the assigned shaft.

The preloaded spring is adapted in order to have negligibly deformed first elastic element before the engagement, regardless if the components accelerate, decelerate or both rotate with a constant angular velocity. As a result when the divided gear wheel is not in engagement, it stays in a neutral position with the first spring element being negligibly deformed, despite any occurring acceleration or deceleration of the divided gear wheel parts, due to the existence of the preloaded spring.

If the so-called neutral position occurs without the first elastic element being preloaded a higher suspension rate, in comparison to the suspension rate of the preloaded spring, has to be adopted.

In a preferred embodiment, the at least one compartment comprises at least one damping element. Therefore, the number of damping elements may refer to the number of compartments. Further, the at least one damping element may be comprised by the supports, i.e. the inner or the outer supports. The at least one damping element may also be arranged on another component. Regardless of the position of the at least one damping element, the damping element is provided to damp the recoil or kickback that occurs when the transmission element is disengaged from another transmission element, wherein at least one transmission element is designed according to the invention. This recoil or kickback may lead to a collision of the inner and outer parts.

In a further embodiment, the at least one first part is arranged at least partially within the at least one second part. This means, that the two transmission element parts are at least partially arranged within each other and therefore an inner and an outer part may exist. Forming a compartment by at least partially arranged transmission elements within each other, allows the elastic elements to be better protected and a more compact installation space to be achieved.

As mentioned above, the transmission elements may be gear wheels, preferably bevel or spur gear wheels, or selectors such as dog clutch type selectors.

Therefore, a gearbox according to the present invention comprises at least one drive shaft, at least one drive wheel coupled to the at least one drive shaft, an output shaft, at least one selector coupled to the output shaft or the at least one drive shaft, and at least one gear wheel, wherein the at least one gear wheel and/or the at least one selector are transmission elements according to the invention. The drive shaft is coupled to an engine and therefore receives power. The output shaft forms the output side. The output side might be a propeller of a boat. The selector is used to engage the at least one gear wheel as defined above to the output shaft so that a power transmission between the drive shaft to the output shaft is realized via the drive wheel, the gear wheel and the selector.

Typically the at least one gear wheel is in constant engagement with one drive wheel or with one other gear wheel. Thus, by coupling the selector located on the output shaft to the gear wheel, the above described power transmission between the drive and the output shaft can be realized.

The drive wheel is preferably given by a bevel pinion. For a functioning transmission system, the gear wheel must be adapted to the drive wheel or vice versa. Hence, if a bevel pinion forms the drive wheel, the divided gear wheel must be given by a bevel gear wheel. Other types of gear wheels may be used. Further, also the gear wheel must be adapted to the selector or vice versa. Thus, if a dog clutch type selector is given, the gear wheel needs to comprise respective coupling elements.

In a preferred embodiment the rotational axis of the at least one gear wheel and the rotational axis of the drive wheel form a 90° angle. Different angles may be realized using different gear and drive wheels.

Preferably, the selector comprises first coupling elements for rotationally coupling and/or de-coupling with corresponding first coupling elements of the at least one gear wheel and/or comprises second coupling elements for rotationally coupling and/or de-coupling with corresponding coupling elements of the output shaft. The number of coupling elements intended for mutual coupling and/or de-coupling may differ, e.g. the first coupling elements of the selector may be less than the first coupling elements of the gear wheel. The coupling elements may be formed by cavities or protrusions. Thus, if the first coupling elements are for example formed by protrusions and may be less than the second coupling elements that are for example formed by cavities, there may be a greater number of coupling possibilities. The same applies of course also vice versa.

Additionally, the selector may be axially or helically movable along the axis of the output shaft. A helical movement is understood as a combination of an axial and a rotational movement. Further, the selector may be torque proof fixed to the assigned shaft, i.e. the drive or the output shaft. The movement of the selector allows engagement with corresponding engagement means of a gear wheel, which may be a divided gear wheel. The axial movement of the selector may be guided by guiding means. Those guiding means may be arranged linear or helically. As a consequence of helical guiding means, the selector will additionally rotate when axially moving, contributing in a smaller difference in angular velocities between the two engaging components, and therefore achieving an even smoother engagement. In this case the shifting mechanism would have to secure the engagement of the two components with the help of a securing mechanism (e.g. a worm gear mechanism, a hydraulic mechanism etc.).

In addition, the selector may be a dog clutch type selector. Such a dog clutch type selector may comprise teeth or other engagement means which can be coupled with engagement means of the gear wheel. Thus, by engaging the selector, power transfer may be achieved. If the gearbox comprises two gear wheels, the selector may be engaged with one of the gear wheels to provide a rotation of the assigned shaft in one direction and may be engaged with the other gear wheel to provide rotation of the assigned shaft in an opposite direction. The selector may be arranged concentrically to the output shaft.

In addition or as an alternative, at least one sensor for measuring the angular velocity of the drive wheel and/or the at least one gear wheel and/or the output shaft and/or the drive shaft and/or the selector is arranged within the gearbox. By using the sensor information, the throttle may be adjusted in order not to experience stalling. Thus, the throttle may be adjusted automatically in relation to the sensor information. The sensor data can also be used for monitoring systems or the like.

The object of the present invention is further solved by a transmission system comprising a transmission element and/or a gear box as defined above.

Irrespective of the above described embodiments, the present invention is further based on the following embodiments of a transmission element such as a divided gear wheel, a power transmission system and a method for operating a power transmission system:

A transmission element, e.g. a divided gear wheel, wherein said transmission element comprises an inner part being engageable with the assigned shaft and an outer part comprising a gear teething suitable for the provided meshed gear wheel, adapted for torque transmission to the other gear wheel, wherein the inner part comprises engagement means that are adapted to engage the inner part with the assigned shaft, wherein upon engagement, the inner part is torque proof engaged with an assigned shaft, wherein the inner part and the outer part have a common rotational axis, wherein the inner part is at least partially arranged within the outer part, wherein the inner part is arranged angularly deflectable with respect to the outer part around the common rotational axis, wherein the inner part is coupled to the outer part by means of at least one set of two elastic elements wherein each set of two elastic elements is arranged in a circumferential direction and received within a compartment formed by the inner part and the outer part, wherein each set of two elastic elements is positioned in a way that, the first elastic element consisting the set of two elastic elements is initially deformed upon deflection of either the inner part or the outer part with the deformation of the second elastic element consisting the set of two elastic elements, following after the completion of the engagement of the inner part with the assigned shaft, with said deformation of a second elastic element being accompanied by a simultaneous and continuing deformation of the first elastic element, wherein the first elastic element and the second elastic element consisting the set of two elastic elements of each set of two elastic elements have different spring constants in relation to each other, with the spring constant of the first elastic element being smaller than the spring constant of the second elastic element, wherein the inner part comprises at least one inner support and the outer part comprises at least one outer support that support each set of two elastic elements, wherein the first elastic element is in constant contact with the inner support and the outer support, wherein the at least one inner support and the at least one outer support are in accordance to the number of the selected sets of two elastic elements and their formation is in relation to each other, and wherein the inner part and the outer part are adapted to rotate with the same angular speed if each set of two elastic elements is fully loaded under the occurring load.

Further, the at least one inner support of the inner part and/or the at least one outer support of the outer part may comprise a surface with a damping characteristic.

In a preferred embodiment, a power transmission system, e.g. for an inboard / outboard motor for a marine engine, comprising: a drive shaft, supporting one drive gear wheel, torque proof fixed with the shaft; a output shaft, supporting two transmission elements according to the invention, e.g. two divided gear wheels, wherein each of the two transmission elements constantly meshes with the provided drive gear wheel, thereby defining a forward and a reverse gear ratio, wherein divided gear wheels are adapted to freely rotate when not engaged with the output shaft; and one engagement component/dog clutch type selector, that is assigned to the output shaft and assigned to both the divided gear wheels, wherein the engagement component/dog clutch type selector is positioned concentrically to the output shaft, torque proof fixed with the output shaft, arranged axially movable along the output shaft in order to select forward or reverse gear ratio, adapted to engage the inner part of the divided gear wheels and thereby torque proof fixing the inner part with the output shaft.

The power transmission system, e.g. for an inboard / outboard motor for a marine engine, may comprise: a output shaft, supporting a torque proof fixed with the output shaft gear wheel; two drive shafts, each supporting a torque proof fixed with the drive shaft drive gear wheel, and a divided gear wheel as described above, wherein each of the two divided gear wheels constantly meshes with the provided gear wheel, thereby defining a forward and a reverse gear ratio, wherein divided gear wheels are adapted to freely rotate when not engaged with the assigned drive shafts; and an engagement component/dog clutch type selector, that is assigned to each of the respective drive shafts and assigned to each of the divided gear wheels, wherein the engagement component/dog clutch type selector is positioned concentrically to each of the respective drive shafts, torque proof fixed with each of the respective drive shafts, arranged axially movable along each of the respective drive shafts in order to select forward or reverse gear ratio, adapted to engage the inner part of the divided gear wheels and thereby torque proof fixing the inner part with the respective drive shaft.

Preferably, the axial movement of each of the engagement component/dog clutch type selector along the assigned output shaft or the assigned drive shaft is guided by guiding means that can have any suitable form or shape, wherein upon interaction with the engagement surface, which is in accordance with the selection of the guiding means, the engagement component/dog clutch type selector may be rotated in relation to the assigned output shaft or the assigned drive shaft when is axially moved.

In addition or as an alternative, the engagement component/dog clutch type selector comprises engagement means facing the assigned divided gear wheel, positioned in accordance to the corresponding engagement means of the inner parts of the divided gear wheels formed in relation and in accordance to the form and to the position of the engagement means of the inner parts adapted to interact with them, engaging the engagement component/dog clutch type selector with the inner parts wherein upon engagement the inner part is torque proof engaged with the assigned output shaft or the assigned drive shaft.

Further, the power transmission may comprise a mechanic, electric or hydraulic gear shifting mechanism that is adapted to axially move the at least one engagement component/dog clutch type selector, selecting or deselecting the desired divided gear wheel by engaging or disengaging the according inner part, by an according movement of the gear shifting lever which is connected in the respective gear selector coupling, changing gear ratios.

Preferably, a method for operating a power transmission system may comprise the following steps: rotating drive shaft and transferring power to output shaft by means of a forward gear ratio; performing a gear ratio changing action from a forward gear ratio to a reverse gear ratio; axially moving the respective engagement component/dog clutch type selector and thereby disengaging the inner part of the divided gear wheel of the forward gear ratio from the torque proof fixing with the assigned output shaft or the assigned drive shaft, and engaging the inner part of the divided gear wheel of the reverse gear ratio, thereby torque proof fixing said inner part with the assigned output shaft or the assigned drive shaft, wherein the inner part of the divided gear wheel of the second gear ratio is angularly deflected with respect to the outer part and each set of two elastic elements is being loaded as a result of this deflection; transferring power to the output shaft by means of a reverse gear ratio.

As an alternative the method comprises the following step, wherein during axial moving the at least one engagement component/dog clutch type selector is guided by helical means and rotates in relation to the assigned output shaft or to the assigned drive shaft to compensate the difference in angular velocity at the beginning of the gear ratio changing action between the assigned output shaft or the assigned drive shaft and the divided gear wheel, to be engaged, of the second gear ratio.

Furthermore, a boat with an inboard / outboard motor may comprise the above described at least one divided gear and/or a power transmission.

The present invention will now be described in further detail with reference to the accompanying schematic drawings, wherein

Figure 1          shows a perspective cross-sectional view of a power transmission system according to the invention,

Figure 2          shows an exploded view of the power transmission system of Figure 1,

Figure 3          shows an exploded view of an embodiment of the inventive transmission element shown here as a divided gearwheel of Figure 1,

Figure 4          shows an exploded view of an alternative embodiment of the divided gear wheel,

Figure 5          shows a perspective view of an alternative embodiment of the invention,

Figure 6          shows a perspective cross-sectional view of an alternative embodiment of a power transmission system,

Figure 7          shows an exploded view of a divided gear wheel of the alternative embodiment shown in Figure 6,

Figure 8A to 8G     show gear changing action sequences,

Figure 9          shows a gear gifting mechanism,

Figure 10         shows a perspective cross-sectional view of an embodiment of the inventive transmission element shown here as a dog clutch type selector,

Figure 11         shows an exploded view of the dog clutch type selector of Figure 10

Figure 12          shows an exploded view of an alternative embodiment of the inventive transmission element shown here as a selector,

Figure 13          shows an exploded view of a power transmission system comprising a dog clutch type selector according to Figure 10,

Figure 14          shows a perspective cross-sectional view of an alternative embodiment of the inventive transmission element shown here as a dog clutch type selector, and

Figure 15          shows an exploded view of an alternative embodiment of a power transmission comprising a dog clutch type selector according to Figure 14.

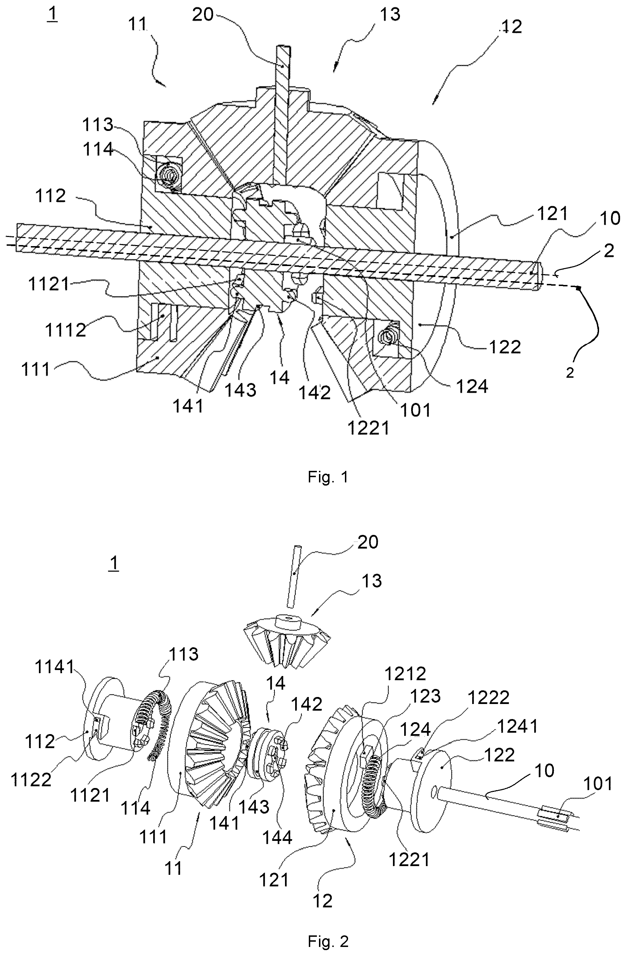

Figures 1 and 2 show a power transmission system according to the invention and illustrate the component parts incorporated into the gearbox which are a drive wheel 13, e.g. a bevel pinion, a first divided gear wheel 11 and a second divided gear wheel 12. In Figures 1 and 2, both the first and the second divided gear wheels 11, 12 are constantly meshed with the drive wheel 13, and their main axis form a 90° angle. Furthermore, a transmission element 3 according to the present invention is depicted by either one of the divided gear wheels 11 and 12.

The drive wheel 13 is torque proof fixed with a drive shaft 20 that receives power from an engine. The divided gear wheels 11, 12 are supported by an output shaft 10, which may have a propeller of a boat torque proof fixed with the shaft in one end.

The divided gear wheels 11, 12 comprise a first part 112, 122, i.e. an inner part 112, 122 and a second part 111,121, i.e. an outer part 111, 121. Both the divided gear wheels 11, 12 are supported by the prop shaft 10 but are not constantly torque proof fixed with the prop shaft 10 and therefore are free to rotate about an axis 2 when not engaged to the output shaft.

The torque proof connection of the inner part 112 to the output shaft 10 is achieved by a selector 14 which interacts with the inner part 112, 122 of the divided gear wheels 11, 12. Such a selector may be a dog clutch type selector as depicted. The selector 14 is positioned in between the divided gear wheels 11, 12 and is assigned to both the divided gear wheels. In addition, the dog clutch type selector 14 is provided as torque proof fixed to the assigned shaft but has the ability to be moved axially. The axial movement may be guided by coupling elements 101 of the output shaft 10. Those coupling elements may be arranged linear or helically.

The dog clutch type selector 14 in Figures 1 and 2 shows a gear selector coupling 143 which may be coupled to a throttle lever that controls the axial position of the selector 14. By moving the throttle lever in the according position, the selector 14 engages either the first divided gear wheel 11 or the second divided gear wheel 12. The movement of the throttle lever may be manually or automatically. Additionally, the selector 14 may not interact with any of the divided gear wheels 11, 12 by staying in a neutral position in between the divided bevel gears 11, 12.

The selector 14 has engagement means such as first coupling elements 141, 142 facing each divided gear wheel 11, 12. As can be seen, the first coupling elements 141 of the selector are assigned to the divided gear wheel 11 and the first coupling elements 142 are assigned to the divided gear wheel 12. The first coupling elements 141, 142, i.e. the engagement means 141, 142, are presented as protrusions. It goes without saying, that the engagement means can also be formed as cavities or a combination of both in accordance to the first coupling elements 1121, 1221 of the inner parts of the first and second divided gear wheels 11, 12. In addition, preferably, both the first coupling elements 1121, 1221 of the first and second divided gear wheels 11, 12 and the engagement means 141, 142 of the selector 14, comprise a great number of teeth or the like. This is preferred due to the fact that a collision between the engagement means 141, 142 and the front face of the inner parts 112, 122 of the divided gear wheels 11, 12 is not desired, and therefore a great number of teeth is preferred with each teeth having a pointed face which facilitates the engagement. In addition, when using several teeth, the load can be distributed over the teeth. When the engagement means 141, 142 and the engagement means of the first coupling elements 1121, 1221 of the divided gear wheels meet, the significant compression of the elastic element 114, 124 will begin. The elastic elements are depicted as spring elements in the figures shown, wherein the elastic elements 114, 124 depict spring elements with low and the elastic elements 113, 123 depict spring elements with high suspension rates. It goes without saying that engagement means 141, 142 are in accordance with first coupling elements 1121, 1221 in relation to their number, form, engagement surfaces etc. In addition, the provision of a great number of engagement means, in both the inner parts 112, 122 and in the dog clutch type selector 14, decreases the demanded tooth depth of the engagement means.

Therefore it is made clear that the decreased occurred inertia (due to the fact that initially upon engagement, only the inner parts 112, 122 of the divided gear wheels 11, 12 take part in the engagement/gear selection) accompanied by the softer springs 114, 124 result in a quicker and smoother gear change.

The divided gear wheel 11 comprises an inner part 112 supported by the output shaft 10, free to rotate when not engaged to the output shaft 10 by the selector 14, and a second part 111 that is supported by the first part 112. The second part 111 has a teething, presented here as a bevel gear teething, on its outer surface which meshes with the teething of the drive wheel 13. Both parts are coupled by one set of springs (two springs in total) where the set comprises one spring that has a lower suspension rate and protrudes on a front face of a second spring that has a higher suspension rate. Thus, the first spring is partially arranged within the other spring. Those spring elements may be different elastic elements such as rubber elements. The springs are positioned concentrically to each other with the first elastic element protruding out of the second elastic element on a front face, and are housed in a spring compartment formed in between the first part 112 and second part 111, i.e. the inner 112 and outer 111 part. As mentioned before, each spring consisting the set of springs can be positioned in a separate compartment but always the divided gear wheel will behave as described. The inner part 112 and the outer part 111 have the ability to deflect angularly in relation to each other, until the set of springs is fully loaded. When the set of springs is fully loaded both, the inner part 112 and the outer part 111, rotate with the same angular velocity. Similarly divided gear wheel 12 comprises an inner part 122 and an outer part 121.

Figure 2 demonstrates individual parts of the proposed power transmission system. In this figure, a more clear view of the parts comprising the proposed power transmission system can be seen.

As mentioned before, the selector 14 may be a dog clutch type selector, which is torque proof fixed with the output shaft 10 but has the ability to slide axially depending on the position of the throttle lever, engaging and disengaging the desired gear ratio. The engagement to the shaft takes place by engagement means such as second coupling elements 144, which are arranged on the inner cylindrical face of the selector 14. The coupling elements are in accordance to the coupling elements 101 of the output shaft 10, which extend for a suitable length in relation to the distance of the first and second divided bevel gears 11, 12.

When the first gear ratio is desired, an according movement of the throttle lever, positions the selector 14 towards the position of the first divided gear wheel 11. As a consequence, the engagement means 141 of the selector 14 interact with the engagement means 1121 positioned on the front surface of the inner part 112 of the divided gear wheel 11, facing the engagement means 141, and therefore forcing the selector 14 to rotate. Since the selector 14 is torque proof engaged with the output shaft 10, the output shaft 10 also rotates.

When the inner part 112 is not engaged to the selector 14 the softer spring or the softer elastic element, i.e. the elastic element with a lower suspension rate, inside the divided gear wheel 11 is considered not to be deformed (the occurring deformation is negligible for example if the elastic element is preloaded) and the stiffer spring or the stiffer elastic element is also not deformed since it is "shorter" in relation to the softer spring or the softer elastic element and the deflection of the outer part of the divided gear wheel in relation to the inner part is negligible.

When the selector 14 begins to engage to the inner part 112 by the interaction of the engagement means 141 of the selector 14 with the engagement means 1121 of the inner part 112, the rotational force is transferred from the outer part to the softer elastic element and therefore the deformation of the softer elastic element begins, since it was considered not to be deformed. Due to the fact that the softer elastic element has a smaller suspension rate, the engagement takes place easily with a small demand in axial force. As it is obvious, the softer elastic element is deformed initially and after the completion of the engagement, the deformation of the stiffer elastic element follows accompanied by the continuance in deformation of the softer elastic element. When the stiffer elastic element begins to bear load in a progressive manner, the substantial amount of power begins to be transferred. When the load is fully borne by the set of elastic elements, both the inner part 112 and the outer part 111 will rotate with the same angular velocities, and so will the selector 14.

It is worth mentioning that the engagement, i.e. the coupling, of the divided gear wheel and another power transmission component such as the selector is completed during the initial deformation of the softer elastic element, before the beginning of the deformation of the stiffer elastic element. The gear changing action is completed when the load is fully borne by the selected gear ratio.

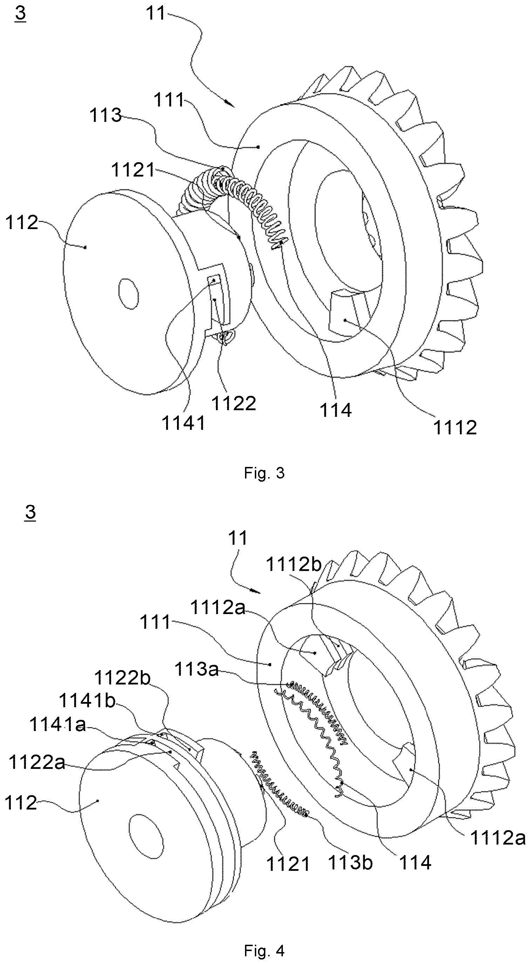

Figure 3 shows an exploded view of the divided gear wheel of Figure 1 and 2. The divided gear wheel 11 comprises an outer part 111, an inner part 112 and two elastic elements such as springs which are positioned as one set of two, with softer elastic element 114 paired with stiffer elastic element 113. As mentioned before, the stiffer elastic element 113 does not necessarily have to be a spring element but can also be any type of elastic element such as a rubber block. In any case, the elastic element has to be positioned in a configuration which permits the softer elastic element to deform initially upon deflection of the outer part in relation to the inner part or the deflection of the inner part in relation to the outer part of the divided gear wheel. After the engagement is completed, the deformation of the stiffer elastic element follows, and is accompanied by a simultaneous deformation of the softer elastic element that continuous to be deformed as the deflection progresses. In the presented layout, only one set of two elastic elements is presented but more can be added with a corresponding change in both the inner and outer parts of the divided gear wheel. In addition the presented layout positions the set of two elastic elements in a single compartment but each of the elastic elements comprising the set of two elastic elements, can be position in a separate compartment, with the divided bevel gear always operating as described.

As can be seen, the softer elastic element 114 has an increased length in comparison to the length of the stiffer elastic element 113, resulting in an initial deformation. The elastic elements are supported by outer support 1112 positioned in the outer part 111 and inner support 1122 positioned in the inner part 112 of the divided gear wheel 11.

The outer support 1112 of the outer part 111 can be "sandwiched" in between the inner support 1122 of the inner part 112 which have a suitable opening in between. In addition, the inner support 1122 has a back that stops the outer support 1112 and as a result restricts the rotation range of the outer part 111. This back has a damping element 1141 with a damping effect in order to prevent the fierce collision of the inner and outer parts, when the previously engaged inner part 112 is disengaged. It goes without saying, that a damping element with a damping effect can also be adopted in the outer support 1112 (in addition or instead of the damping element of the inner support 1122).

The presented divided gear wheel 11 has an analogous layout to the divided gear wheel 12. As a consequence, the divided gear wheel 12 has an outer part 121 and an inner part 122 and two elastic elements in total positioned as one set of two, with the softer elastic element 124 paired with stiffer elastic element 123.

Again, the softer elastic element 124 has an increased length in comparison to the length of the stiffer elastic element 123. The elastic elements are supported by outer support 1212 positioned in the outer part 121 and inner support 1222 positioned in the inner part 122 of the divided gear wheel 12. Damping element 1241 with a damping effect is analogously provided.

Figure 4 shows an exploded view of an alternative embodiment of the divided gear wheel. Similar to the divided gear wheel of the previous embodiment, the divided gear wheel 11 comprises a first part 112, i.e. the inner part, a second part 111, i.e. the outer part, coupling elements 1121, inner supports 1122a, 1122b, outer supports 1112a, 1112b, damping elements 1141a, 1141b as well as elastic elements 113a, 113b, 114.

Further, the divided gear wheel 11 shows two compartments. The first compartment comprises the inner support 1122a and the damping element 1141a and the second compartment comprises the inner support 1122b and the damping element 1141b. The three elastic elements 113a, 113b, 114, depicted as spring elements, are arranged within compartments in the assembled state, wherein the elastic elements 113a, 113b comprise a different length than the elastic element 114. The spring element 114 is longer than the other spring elements 113a, 113b. Further, the spring element 114 may have a lower suspension rate, which is shown by the larger distance of the spring coils. The spring elements 113a and 113b have the same suspension rate. In the assembled state, the spring elements 113a and 113b are arranged within the depicted first compartment and the spring element 114 is arranged in another compartment. Therefore, the first elastic element, i.e. the elastic element 114 which is initially compressed, is received in one compartment and the two second elastic elements, i.e. the elastic elements 113a, 113b which bear the significant amount of the occurring load and which comprise a higher spring rate in relation to the elastic element 114, are received in another compartment. Furthermore, once the spring elements 113a and 114 are assembled in the adjacent compartments, the spring elements 113a and 114 are parallel to each other.

Upon engagement of the divided gear wheel 11 with a power transmission component, the first spring element 114, i.e. the longer spring element with a lower suspension rate, is activated and deforms. As soon as the initial engagement is completed and the actual power transmission begins, wherein the load to be transmitted increases significantly, the other spring elements 113a, 113b, i.e. the shorter and stiffer spring elements with a higher suspension rate, are activated and deformed (together with the first spring element 114) until the load is fully borne by the selected gear ratio.

Further, in the assembled state, the outer support 1112a of the outer part 111 is arranged within the inner support 1122a of the inner part 112 and the outer support 1112b of the outer part 111 is arranged within the inner support 1122b of the inner part 112.

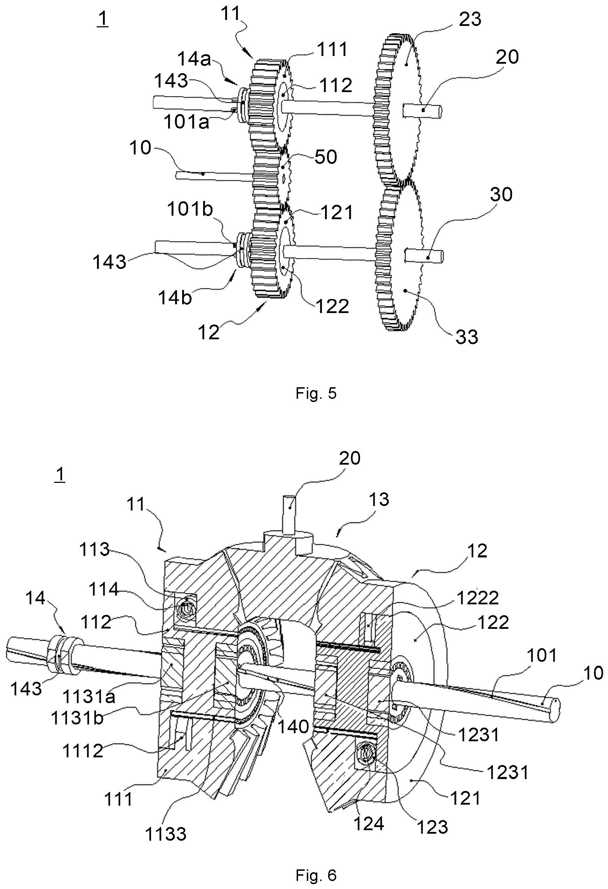

Figure 5 shows a perspective view of an alternative embodiment of the invention. In this alternative, the engageable gear wheels are provided as divided gear wheels 11, 12 with their outer parts 112, 121 comprising a spur gear teething instead of a bevel gear teething.

In addition, the divided gearwheels 11, 12 are supported by separate drive shafts 20, 30 and not by the output shaft. Therefore, the divided gear wheel 11 is supported by the drive shaft 20 and the divided gear wheel 12 is supported by the drive shaft 30. In addition, the drive shaft 20 supports the drive gear wheel 23 and the drive shaft 30 supports the drive gear wheel 33, which constantly meshes with the drive gear wheel 23. Both the drive gear wheel 23 and the drive gear wheel 33 are torque proof fixed with their respective drive shafts 20, 30 (i.e. rotate as the respective shaft rotates).

As mentioned before, the divided gear wheels 11, 12 are free to rotate when a selector 14 does not engage their inner parts 111, 121. In this alternative, each divided gear wheel 11, 12 has a separate selector 14 (14a, 14b) and the two divided gear wheels do not share a single selector as in the previously described configurations.

The selector 14 (now comprising the dog clutch type selectors 14a and 14b), is torque proof fixed (i.e. rotating with the same angular velocity) with the assigned drive shaft 20, 30 but has the ability to move axially in relation to the main axis of the shaft, and the axial position is defined by the respective position of the throttle lever.

In this configuration, the power is transferred from drive shaft 20, 30 to the inner parts 112, 122 of the divided gear wheels 11, 12 and via the set of two elastic elements to the outer parts 111, 121 of the divided gear wheels 11, 12. From there, and since the outer parts 111, 121 are constantly meshed with gear wheel 50, which is torque proof fixed with the output shaft 10, the power is transferred to the output shaft.

In the previously described configurations, the divided gear wheels 11, 12 were engaged to the drive gear wheel. In this alternative configuration, both the divided gear wheels 11, 12 are constantly meshed with the provided gear wheel 50 that is torque proof fixed with output shaft 10. A propeller may be torque proof fixed to one end of the output shaft 10.

The operation of the alternative configuration is analogous to the one described in detail above. Therefore, upon engaging the desired divided gear wheel 11, 12 the direction of rotation of the gear wheel 50 changes and as a result a forwards or backwards movement can be achieved.

Figure 6 shows a partial sectional view of an alternative embodiment of a power transmission system. The main difference of this configuration, in relation to the power transmission systems presented before, is that the selector is guided by helical means instead of linear guiding mean. Further, the engagement takes place in the inner circumferential surface of the inner part 112, 122 instead of the front face of said parts.

Therefore coupling elements 101 have a helical shape and are integrally formed in the outer circumferential surface of output shaft 10.

In addition, the selector may be a different type of selector, which acts as an engagement component. The selector is reshaped accordingly, with the first coupling elements 140 being at the distant end of selector arms. In comparison to the previously presented configurations, the engagement means 142, 141 are combined into a single element, the engagement means 140 that engages both the divided bevel gear 11 and the divided bevel gear 12.

Furthermore, the engagement of the inner parts 112 and 122 takes place on their inner circumferential surface, right on top of output shaft 10. Therefore, when the inner part 112 of the divided bevel gear 11 needs to be engaged with the first coupling elements 140 of the selector 14, the first coupling elements 140 will firstly come through the provided cavities of the bearings 1131, 1231 and then will interact with the cavities of the inner part 112. The number of engagement means of the inner part 112 is purposely increased in relation to the provided first coupling elements 140, i.e. the engagement means 140, (the illustration depicts two engagement means 140) in order to facilitate the engagement of the components.

In Figure 6, none of the divided bevel gears 11, 12 is engaged with the output shaft, and the engagement means 140 are positioned in between the divided bevel gears 11, 12 in a neutral position. When the throttle lever is moved (either forwards or backwards) and due to the fact that the selector has a gear selector coupling 143, the engagement means 140 will be moved either towards the divided gear wheel 11 or towards divided gear wheel 12. As a result, either the inner part 112 of the divided gear wheel 11 or the inner part 122 of the divided gear wheel 12 will be torque proof engaged with the output shaft 10, with the desired gear change being completed.

Since the coupling elements 101 have a helical shape, and the selector 14 is guided by them, an additional (in relation to the angular velocity of output shaft 10) angular velocity will be provided when the selector 14 is moved axially. As a result differences in angular velocities between the engaging components can be compensated, resulting in even quicker and smoother gear change.

In addition, due to the fact that axial forces act to the selector 14, the selector has to be secured in position.

It goes without saying, that the proposed alternative is operational even if the coupling elements 101 are linear instead of the depicted helical.

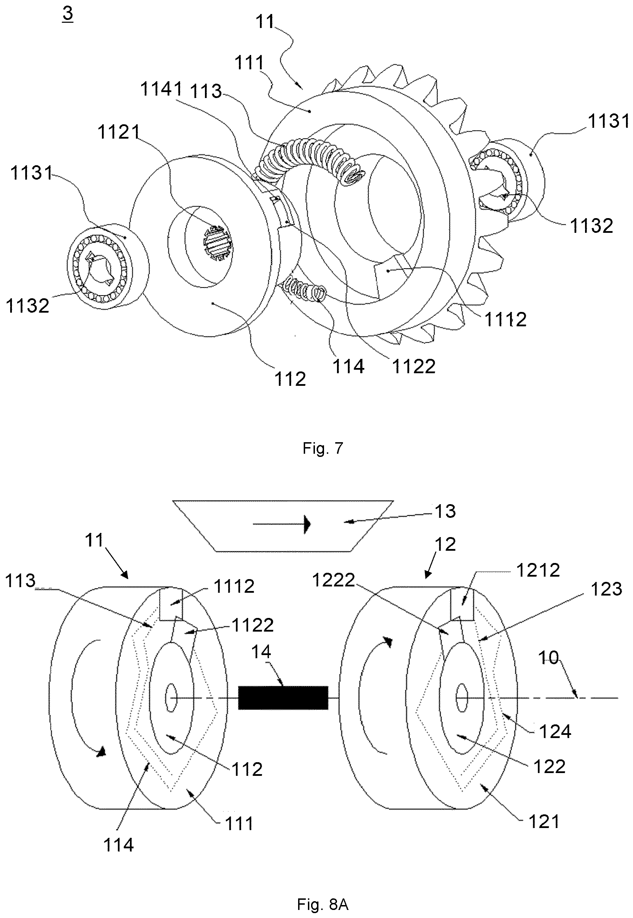

Figure 7 shows an exploded view of a divided gear wheel of the alternative embodiment shown in Figure 6. In Figure 7, a more clear view of the inner part 112 of the divided gear wheel 11 can be seen. As it is obvious, the engagement means 1121 are provided on the inner circumferential surface of the inner part 112, directly above the output shaft 10. Therefore, as the selector 14 is moved axially, the engagement means 140 of the selector 14 can interact with the engagement means 1121, torque proof fixing inner part 112 with output shaft 10.

In addition, since the axial movement of the selector 14 encounters bearings 1131, cavities 1132 are provided. In addition, as mentioned above, the increased number of engagement means 1121 can be seen (in relation to the number of engagement means 140), which are formed with respect to the engagement means 140 of the selector 14. Therefore, since the engagement means 140 of the selector have a helical form in this alternative, the engagement means 1121 of the inner part 112 of the divided gear wheel 11 will also have a helical form. The increased number of engagement means 1121 facilitate the engagement preventing any collision problems.

Figures 8A to 8G represent a gear changing action from neutral to forward and then to backward in relation to the embodiment presented in Figures 1 and 2. In Figure 8A, the gear lever is positioned in neutral and therefore the selector 14 is positioned in between the divided bevel gears 11, 12 and none of the inner parts 112, 122 is torque proof engaged with the assigned output shaft 10.

The divided gear wheels 11, 12 are in engagement with the drive wheel 13 via their outer parts 111, 121. Elastic elements 114, 124 connect the inner parts 112, 122 and the outer parts 111, 121.

In addition, inner supports 1122, 1222 support the elastic elements 114, 124, and outer supports 1112, 1212 are provided supporting the elastic elements 113, 114, 123, 124.

The arrows provided in the figures show the direction of rotation of each of the divided gear wheels 11, 12, the direction of rotation of the assigned output shaft 10, and the direction of rotation of the drive wheel 13.

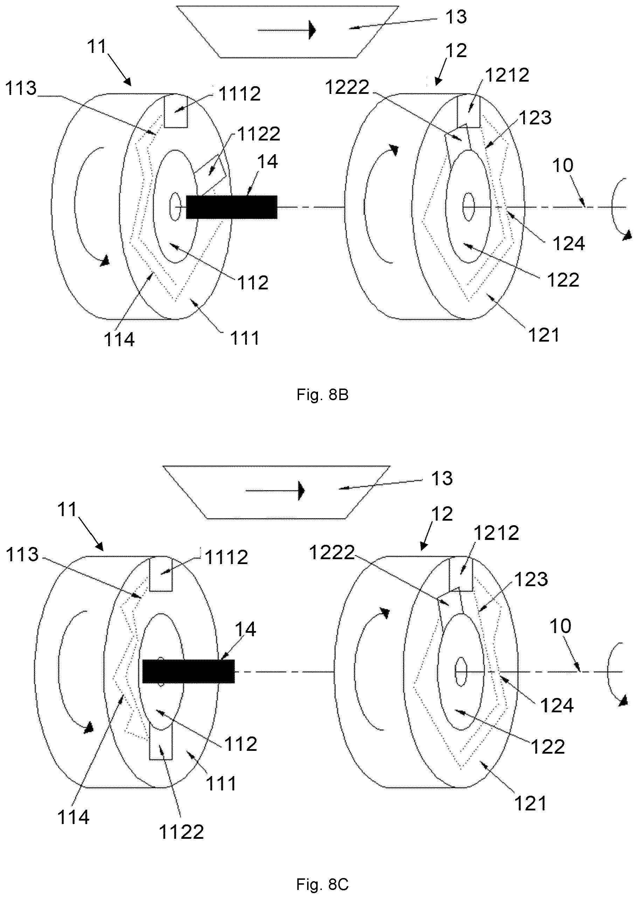

In Figure 8B, the selection of the first gear ratio, which is assigned to a forward movement (divided gear wheel 11) begins. Thus, the selector 14 is axially moved towards the divided gear wheel 11 and the engagement means of the selector 14 interact with the engagement means of the inner part 112 of the divided gear wheel 11, and therefore the softer elastic element begins to compress.

As a result, of the beginning of the engagement, the inner part 112 of the divided gear wheel 11 rotates with fewer rotations in relation to the outer part 111. The softer elastic element compresses and the stiffer elastic element does not.

In Figure 8C, the engagement of divided gear wheel 11 has been completed and the softer elastic element is compressed until the stiffer elastic element is reached, due to the deflection of the components.

Progressively, the stiffer elastic element 113 compresses until the entire occurring load is received by the element and the elastic element is not further compressed. Afterwards, when both of the elastic elements 113, 114 are fully compressed under the occurring load, the inner part 112 and the outer part 111 of the divided gear wheel 11 have the same angular velocities in relation to each other and therefore rotate as one. The output shaft 10 has also the same angular velocity as the divided gear wheel 11.

The divided gear wheel 12 also rotate as one but the elastic elements 123, 124 are fully decompressed as it is not engaged with the selector 14.

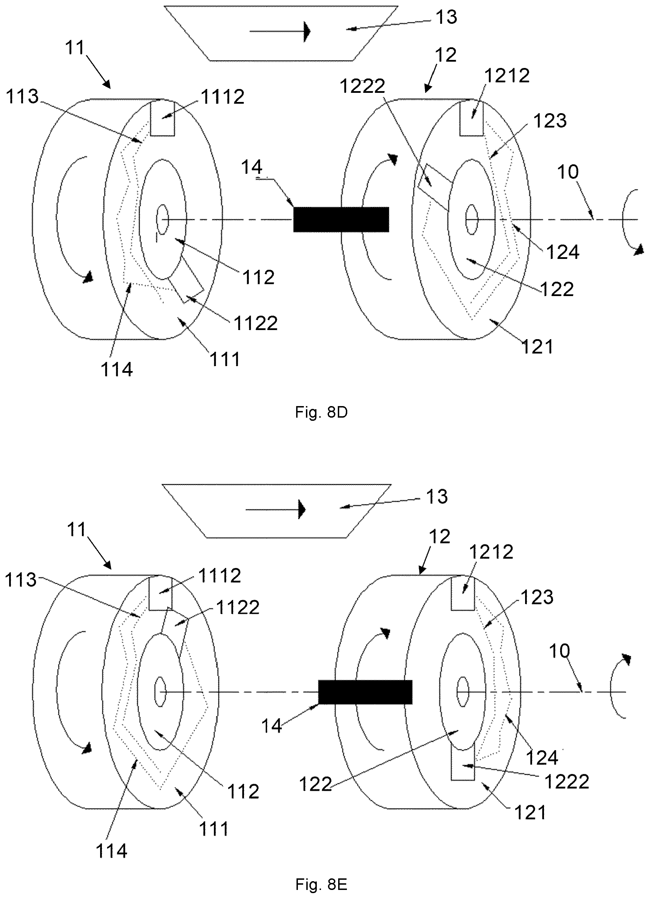

In Figure 8D, a reverse gear command is being given with divided gear wheel 11 being now disengaged and the divided gear wheel 12 begins to be engaged with a corresponding movement of the gear lever and as a consequence with a corresponding movement of the selector 14 towards the divided gear wheel 12.

The output shaft 10 rotates as previously (direction is shown by the arrow) due to the inertia and the speed of the boat. The inner part 122 starts to be engaged by the selector 14 and as a result the softer spring element 124 inside the divided gear wheel 12 begins to compress and the assigned output shaft 10 decelerates. The inner part 122 has a smaller angular velocity in relation to the angular velocity of the outer part 121.

The elastic elements 113, 114 decompress and the inner part 112 of the divided gear wheel 11 has an increased angular velocity in relation to the outer part 111.

Figure 8E shows that the reverse gear engagement has been completed by the engagement of the inner part 122 of the divided gear wheel 12 with the selector 14, and the elastic elements 123, 124 are fully loaded under the occurring load.

Both, the inner part 122 and the outer part 121 of the divided bevel gear 12 have the same angular velocity and so does the output shaft 10.

The divided gear wheel 11 is not engaged with the selector 14 and the elastic elements 113, 114 are fully decompressed. The inner part 112 rotates with the same angular velocity as the outer part 111.

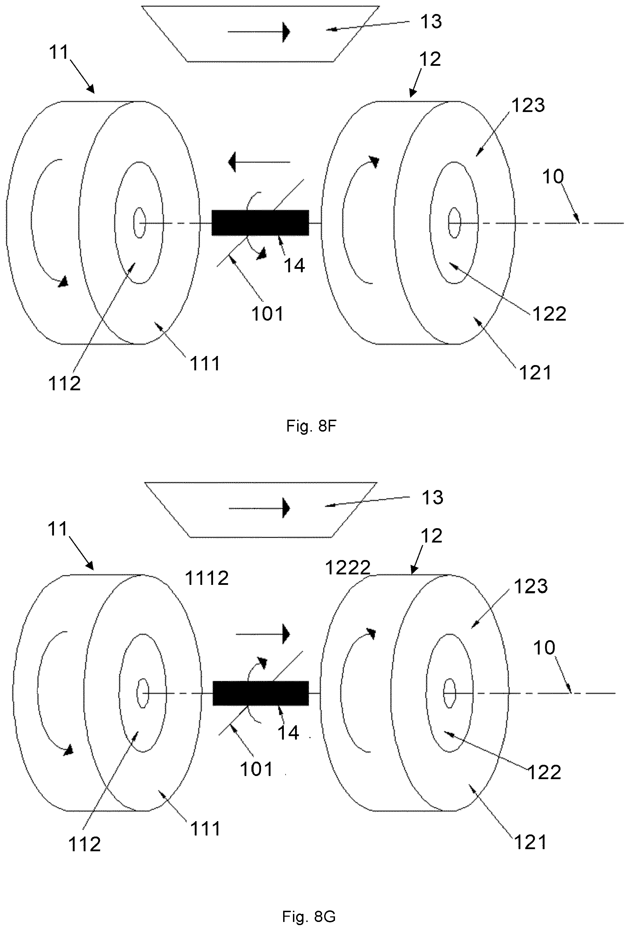

Figure 8F and Figure 8G show the relative rotational movement of the selector in relation to the axial movement of the selector 14, when helical coupling elements 101 are adopted.

By the adaptation of helical coupling elements 101, the selector 14 rotates in the same direction as the inner part of the divided gear wheel that is going to be engaged with the selector.

In comparison, the two additional rotational movements have an opposite direction of rotation in relation to each other but so do the divided gear wheels 11, 12 and therefore the desired feature is achieved, assisting with a smoother engagement.

In Figure 8F, the selector 14 is moved towards the divided gear wheel 11 and rotates as the divided gear wheel 11 and in Figure 8G the selector 14 is moved towards the divided gear wheel 12 and rotates as the divided gear wheel 12.

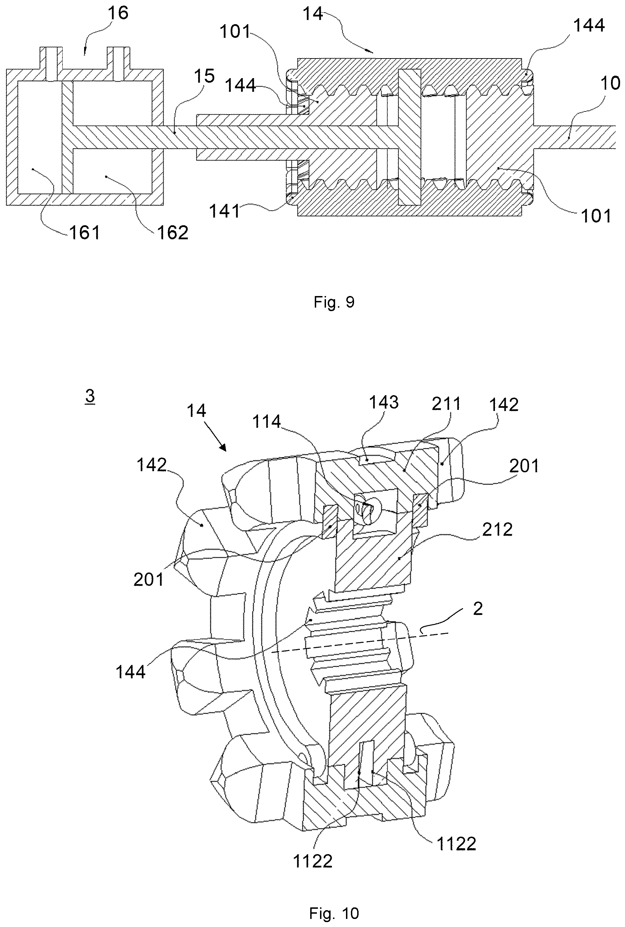

In Figure 9 an exemplary gear shifting mechanism is presented.

The exemplary gear shifting mechanism comprises a gear shifter 15 that controls the position of the selector 14, and therefore the selected gear ratio. The axial movement of the gear shifter 15 is achieved with the help of a hydraulic cylinder 16, which is controlled by a solenoid valve.

When a first gear ratio is desired to be selected, the second chamber 162 is filled with pressurized hydraulic fluid, the selector is axially moved towards the first divided gear wheel 11, and the engagement means 141 of the selector 14, interact with the engagement means of the first divided gear wheel, torque proof fixing said divided gear wheel with the output shaft 10 and therefore selecting the first gear ratio as described in detail above.

When the second gear ratio is desired, the first chamber 161 is filled with pressurized hydraulic fluid (with a corresponding emptying of the second chamber 162), the selector 14 is axially moved and therefore second coupling elements 144 interact with the engagement means of the second divided gear wheel.

The selector 14 is guided by guiding means, i.e. coupling elements 101 of the output shaft 10, positioned in the outer circumferential surface of the output shaft 10, that are shaped helically with a corresponding change in the second coupling element 144 of the dog clutch type selector 14. Therefore, the additional benefits described in detail above can be achieved.

It goes without saying, that the use of the hydraulic cylinder 16 is not restrictive and other types of mechanisms that move the gear shifter 15 can be adapted (e.g. electric motor etc.). Furthermore, the presented guiding means, i.e. coupling elements 101 of the output shaft 10, have a helical form but the exemplary gear shifting mechanism can be adapted for any form of guiding means (e.g. linear guiding means). As it is obvious, when linear guiding means are selected the selector does not have an additional angular velocity upon axial movement.

Figure 10 shows one embodiment of the inventive transmission element 3 here shown as a dog clutch type selector 14. The transmission element 3, i.e. here the selector 14, comprises a first part 212, i.e. an inner part, and a second part 211, i.e. an outer part. Further, the selector 14 comprises elastic elements as well as first coupling elements 142 such as teeth that are adapted to engage with corresponding coupling elements of a free, engageable gear wheel. The first part 212 and the second part 211 are angularly deflectable in relation to each other and the deflection is limited by the existence of the elastic elements.

The first part 212 is torque proof engaged with an assigned shaft by the second coupling elements 144 provided in the inner circumferential surface of the first part 212. The second coupling elements 144 of the selector torque proof fix the first part 212 directly to the shaft ( may be torque proof engaged to the shaft via a dog hub which is torque proof engaged to the shaft). A second part 211 comprises first coupling elements 142, adapted to interact with the corresponding coupling elements of a free, engageable gear wheel.

Upon engagement the gear wheel, is torque proof engaged with the second part 211. Since the second part 211 is connected to the first part 212 via the elastic elements, the elastic elements will eventually be compressed so that the rotational forces and/or torque from the second part 211 will be transferred to the first part 212. Since the first part 212 is torque proof engaged with the shaft, a power transmission between the shaft and the gear wheel is realized via the selector.

The selection of different gear ratios is achieved by axially moving the selector 14 along the shaft. The presented selector 14 is axially moved as an entity, when an axial movement of the selector is initiated by a gear selector that acts on a gear selector coupling 143 of the selector 14. The gear selector coupling 143 is positioned on the circumferential surface of the second part 211.

The first coupling elements 142 are provided in both sides of the second part 211. Therefore, both sides face an engageable gear wheel. The specific shape of the first coupling elements 142 may vary and the presented one is not restrictive.

Thus, the first coupling elements 142 may be protrusions, cavities or a combination of both according to the corresponding coupling elements of the engageable gear wheels. However, the number of the first coupling elements 142 of the selector and the number of the corresponding coupling elements of the gear wheel do not necessarily have to match. The coupling elements provided as cavities may be greater in number than the corresponding coupling elements provided as protrusions.

As mentioned above, the first part 212 is coupled to the second part 211 by means of at least two elastic elements. In the presented cross-sectional view only the softer elastic element 144 can be seen but a second elastic element is also provided (not shown). Both elastic elements are concentrically positioned, wherein both elastic elements may be arranged partially within each other.

Both first part 212 and second part 211 comprise elastic element supports, with the inner supports 1122 being visible in Figure 1. Inner supports 1122 are provided as two elastic element supports with a "gap" in between in which the outer support (not shown) can be housed.

Furthermore, locking elements 201 are provided, that secure the first part 212 and the second part 211, so that the two parts 211 and 212 are angularly deflectable in relation to each other, but can axially be moved as one.

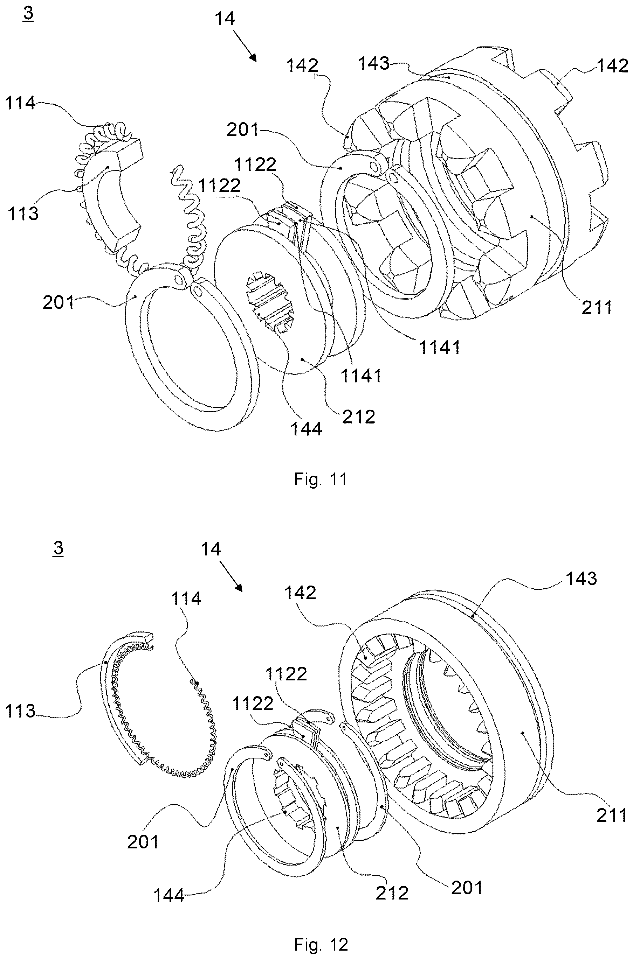

In Figure 11 an alternative embodiment of the transmission element 3, here shown as an alternative dog clutch type selector 14, is depicted. In this alternative embodiment, the inner supports 1122 comprise a damping element 1141 that damps the return of the second part 211 when it stops being engaged and it recoils. Both damping elements 1141 shown are arranged on the inner face of the inner supports 1122. Therefore, both damping elements 1141 face each other. Depending on structure of the selector, a different arrangement of the damping elements, for example on different surfaces of the supports, may be favorable.

Further, two elastic elements 113 and 114 are shown in Figure 11, wherein the first elastic element 114, i.e. the softer elastic element, surrounds the second elastic element 113, i.e. the stiffer elastic element. As shown in Figure 11, the first elastic element is provided by a spring element and the second elastic element is provided by a rubber block.

Figure 12 presents yet another alternative embodiment of an inventive dog clutch type selector 14. In this alternative embodiment, the selector 14 comprises first coupling elements 142 on an inner circumferential surface of the second part 211. Due to the fact, that the first coupling elements 142 on the inner circumferential suface of the selector are only provided on one side of the selector 14 and not on both sides, using this type of selector requires that each engageable gear wheel comprises its own selector. Therefore, the movement of the selectors can be independent of each other.

Further, in comparison to the alternative embodiment presented in Figure 11, the second (stiffer) elastic element 113 is positioned on top of the first (softer) elastic element 114, wherein the first elastic element 114 is provided by a spring element and the second elastic element 113 is provided by a rubber block.

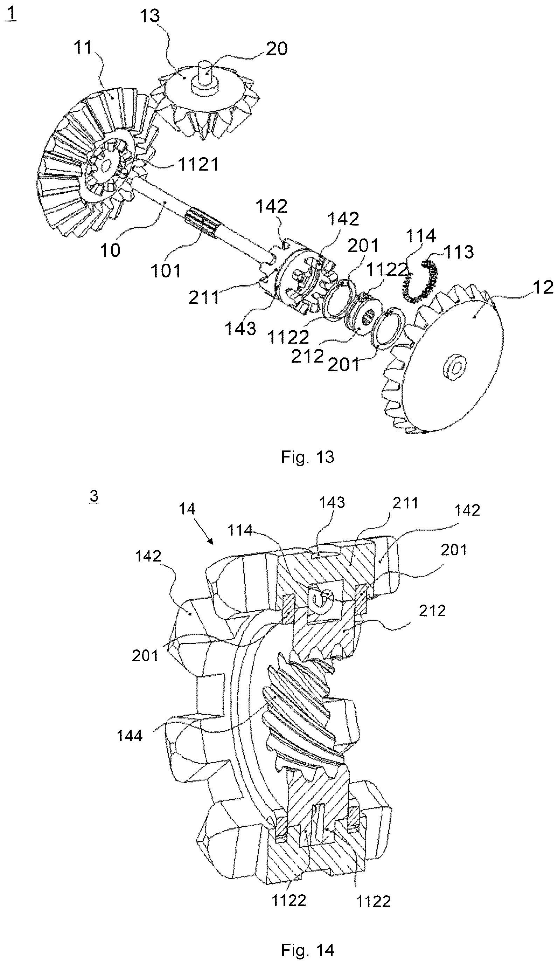

Figure 13 shows an exemplary power transmission system 1 comprising two gear wheels 11 and 12, one drive wheel 13 and the selector 14 according to Figure 10. As mentioned before, the selector 14 is torque proof fixed with the output shaft 10 via second coupling elements 144 of the selector 14 and coupling elements 101 of the output shaft 10. Further, the selector 14 is adapted to slide axially along the output shaft 10 depending on the position of the gear shifter 15. The coupling between the output shaft 10 and the selector 14 is provided by the interaction of the coupling elements 101 and 144.

When the first gear ratio is desired, a movement of the gear shifter, positions the selector 14 towards the position of one of the gear wheels 11 or 12. Consequently, the first coupling elements 142 of the selector 14 interact with the first coupling elements 1121 or 1221 of the gear wheel 11 or 12. Upon engagement, the selector 14 and the respective gear wheel 11 or 12 rotate together. Since the selector 14 is torque proof fixed with the output shaft 10, the output shaft 10 also rotates. When the second part 211 of the selector 14 is not engaged with either one of the gear wheels 11 or 12, the first (softer) elastic element of the second part 211 of the selector 14 is considered not to be deformed (the occurring deformation is negligible) and the second (stiffer) elastic element is also not deformed since it is shorter in relation to the first elastic element.

Nevertheless, during engagement of the clutch, the first (softer) elastic element is deformed initially and after the completion of the engagement, the deformation of the second (stiffer) elastic element follows, wherein the deformation of the first elastic element is continued throughout the deformation of the second elastic element. As soon as the second elastic element starts to be compressed, the load, i.e. power, begins to be transferred. When the load is fully borne by the set of elastic elements, both the first part 212 and the second part 211 rotate with the same angular velocity.

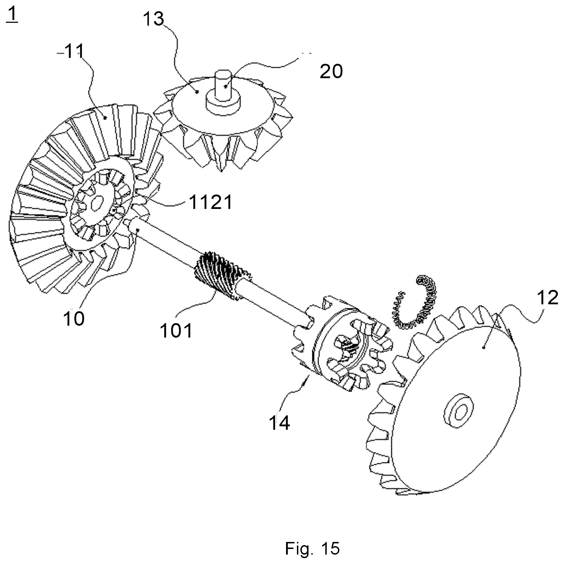

A further embodiment of a selector according to the invention is shown in Figure 14. The selector 14 differs from the selector depicted in Figure 10 in that the second coupling elements 144 are formed helically. As shown in Figure 15, the corresponding coupling elements 101 of the output shaft 10 are also formed helically. The coupling elements 101 and 144 may comprise helical grooves or protrusions that are adapted to guide the first part 212 helically i.e. in combined axial and rotational movement.

The above described power transmission systems can, for example, be used in marine engines or automobiles, comprising transmission elements according to the invention allowing a smoother and quicker gear change as well as lesser gear wear.

<center>Reference numerals</center>

| | | | |
|---|---|---|---|
| 1 | power transmission system | 113a | second elastic element |
| 2 | axis | 113b | second elastic element |
| 3 | transmission element | 114 | first elastic element |
| 10 | output shaft | 121 | second part |
| 11 | (divided) gear wheel | 122 | first part |
| 12 | (divided) gear wheel | 123 | second elastic element |
| 13 | drive wheel | 124 | first elastic element |
| 14 | selector | | |
| 14a | separate selector | 140 | first coupling elements (selector) |
| 14b | separate selector | | |
| 15 | gear shifter | 141 | first coupling elements (selector) |
| 16 | hydraulic cylinder | 142 | first coupling elements (selector) |
| 20 | drive shaft | | |
| 23 | drive gear wheel | 143 | gear selector coupling |
| 30 | drive shaft | 144 | second coupling elements (selector) |
| 33 | drive gear wheel | | |
| 50 | gear wheel | 161 | first chamber |
| 101 | coupling elements (output shaft) | 162 | second chamber |
| 101a | coupling elements | 201 | locking element |
| 101b | coupling elements | 211 | second part (selector) |
| | | 212 | first part (selector) |
| 111 | second part (gear wheel) | | |
| 112 | first part (gear wheel) | 1112 | outer support |
| 113 | second elastic element | 1112a | outer support |
| 1112b | outer support | | |
| 1121 | first coupling elements (gear wheel) | | |

(continued)

| 1122 | inner support |
|------|---------------|
| 1122a | inner support |
| 1122b | inner support |
| 1131 | bearings |
| 1132 | cavities |
| 1141 | damping element |
| 1141a | damping element |
| 1141b | damping element |
| 1212 | outer support |
| 1221 | first coupling elements (gear wheel) |
| 1222 | inner support |
| 1231 | bearings |
| 1241 | damping element |

**Claims**

1. Transmission element of a power transmission system (1) for use in a gearbox,

   wherein the transmission element comprises at least one first part (112; 122; 212), at least one second part (111; 121; 211) which is rotatable relative to the at least one first part (112; 122; 212) about a common axis (2) by a limited degree, and at least one first elastic element (114; 124),
   wherein the at least one first part (112; 122; 212) and the at least one second part (111; 121; 211) together form at least one compartment in which the at least one first elastic element (114; 124) is arranged between the at least one first part (112; 122; 212) and the at least one second part (111; 121; 211) to bias the at least one first part (112; 122; 212) and the at least one second part (111; 121; 211) rotationally away from each other in opposite directions,
   wherein the transmission element (3) further comprises at least one second elastic element (113; 113a; 113b; 123) arranged within the at least one compartment between the at least one first part (112; 122; 212) and the at least one second part (111; 121; 211), wherein the at least one second elastic element (113; 113a; 113b; 123) is arranged parallel to the at least one first elastic element (114; 124),
   and in that the elastic elements (113, 113a, 113b, 123; 114, 124) comprise different suspension rates, wherein the first elastic element (114; 124) comprises a lower suspension rate than the second elastic element (113; 113a; 113b; 123), wherein the first elastic element (114; 124) is partially arranged within the second elastic element (113; 113a; 113b; 123), **characterized in that**
   the first elastic element (114; 124) is preloaded.

2. Transmission element according to claim 1, wherein the at least one second elastic element (113; 113a; 113b; 123) biases the at least one first part (112; 122; 212) and the at least one second part (111; 121; 211) rotationally away from each other in opposite directions after the at least one first elastic element (114; 124) is loaded.

3. Transmission element according to any of the preceding claims, wherein the at least one first and the at least one second elastic element (113; 113a; 113b; 123) are spring elements, or wherein the at least one first elastic element (114; 124) is provided by a spring element and the at least one second elastic element (113; 113a; 113b; 123) is provided by a rubber element.

4. Transmission element according to any of the preceding claims, wherein the at least one compartment comprises at least one damping element (1141; 1141a; 1141b; 1241).

5. Transmission element according to any of the preceding claims, wherein at least one first part (112; 122; 212) is arranged at least partially within the at least one second part (111; 121; 211).

**6.** Transmission element according to any of the preceding claims, wherein the transmission element (3) is a gear wheel (11; 12; 13; 13a; 13b; 50), preferably a bevel or a spur gear wheel, or a selector (14; 14a; 14b), preferably a dog clutch type selector.

**7.** Gearbox comprising at least one drive shaft (20; 30), at least one drive wheel (13; 23; 33) coupled to the at least one drive shaft, an output shaft (10), at least one selector (14; 14a; 14b) coupled to the output shaft or the at least one drive shaft, and at least one gear wheel (11; 12), wherein the at least one gear wheel (11; 12) and/or the at least one selector (14; 14a; 14b) are transmission elements (3) according to any of the preceding claims.

**8.** Gearbox according to claim 7, wherein the at least one gear wheel (11; 12) is in constant engagement with one drive wheel (13) or with one other gear wheel (50).

**9.** Gearbox according to any of claims 7 or 8, wherein the drive wheel (13) is a bevel pinion.

**10.** Gearbox according to any claims 7 to 9, wherein the selector (14) comprises first coupling elements (140; 141; 142) for rotationally coupling and/or de-coupling with corresponding first coupling elements (1121; 1221) of the at least one gear wheel (11; 12) and/or comprises second coupling elements (144) for rotationally coupling and/or de-coupling with corresponding coupling elements (101) of the output shaft (10).

**11.** Gearbox according to claim 10, wherein the selector (14) is axially or helically movable along the axis (2) of the output shaft (10), and wherein the helical movement along the axis (2) comprises an axial and a rotational movement.

**12.** Gearbox according any of claims 7 to 11, wherein at least one sensor for measuring the angular velocity of the drive wheel (13) and/or the at least one gear wheel (11; 12) and/or the output shaft (10) and/or the drive shaft (20) and/or the selector (14) is arranged within the gearbox.

**Patentansprüche**

**1.** Übertragungselement eines Kraftübertragungssystems (1) zur Nutzung in einem Getriebe,

wobei das Übertragungselement wenigstens einen ersten Teil (112; 122; 212), wenigstens einen zweiten Teil (111; 121; 211), der bezogen auf den wenigstens einen ersten Teil (112; 122; 212) um eine gemeinsame Achse (2) zu einem begrenzten Grad drehbar ist, und wenigstens ein erstes elastisches Element (114; 124) umfasst, wobei der wenigstens eine erste Teil (112; 122; 212) und der wenigstens eine zweite Teil (111; 121; 211) zusammen wenigstens eine Kammer bilden, in welcher das wenigstens eine erste elastische Element (114; 124) zwischen dem wenigstens einen ersten Teil (112; 122; 212) und dem wenigstens einen zweiten Teil (111; 121; 211) angeordnet ist, um den wenigstens einen ersten Teil (112; 122; 212) und den wenigstens einen zweiten Teil (111; 121; 211) drehend voneinander weg in entgegengesetzte Richtungen vorzuspannen, wobei das Übertragungselement (3) ferner wenigstens ein zweites elastisches Element (113; 113a; 113b; 123) umfasst, das innerhalb der wenigstens einen Kammer zwischen dem wenigstens einen ersten Teil (112; 122; 212) und dem wenigstens einen zweiten Teil (111; 121; 211) angeordnet ist, wobei das wenigstens eine zweite elastische Element (113; 113a; 113b; 123) parallel zu dem wenigstens einen ersten elastischen Element (114; 124) angeordnet ist, und dadurch, dass die elastischen Elemente (113, 113a, 113b, 123; 114, 124) verschiedene Federungsraten umfassen, wobei das erste elastische Element (114; 124) eine niedrigere Federungsrate als das zweite elastische Element (113; 113a; 113b; 123) umfasst, wobei das erste elastische Element (114; 124) teilweise innerhalb des zweiten elastischen Elements (113; 113a; 113b; 123) angeordnet ist, **dadurch gekennzeichnet, dass** das erste elastische Element (114; 124) vorbelastet ist.

**2.** Übertragungselement nach Anspruch 1, wobei das wenigstens eine zweite elastische Element (113; 113a; 113b; 123) den wenigstens einen ersten Teil (112; 122; 212) und den wenigstens einen zweiten Teil (111; 121; 211) drehend voneinander weg in entgegengesetzte Richtungen vorspannt, nachdem das wenigstens eine erste elastische Element (114; 124) belastet wird.

**3.** Übertragungselement nach einem der vorhergehenden Ansprüche, wobei das wenigstens eine erste und das wenigstens eine zweite elastische Element (113; 113a; 113b; 123) Federelemente sind, oder wobei das wenigstens eine erste elastische Element (114; 124) von einem Federelement und das wenigstens eine zweite elastische Element (113; 113a; 113b; 123) von einem Gummielement bereitgestellt wird.

4. Übertragungselement nach einem der vorhergehenden Ansprüche, wobei die wenigstens eine Kammer wenigstens ein Dämpfungselement (1141; 1141a; 1141b; 1241) umfasst.

5. Übertragungselement nach einem der vorhergehenden Ansprüche, wobei wenigstens ein erster Teil (112; 122; 212) wenigstens teilweise innerhalb des wenigstens einen zweiten Teils (111; 121; 211) angeordnet ist.

6. Übertragungselement nach einem der vorhergehenden Ansprüche, wobei das Übertragungselement (3) ein Getrieberad (11; 12; 13; 13a; 13b; 50), vorzugsweise ein Kegel- oder ein Stirnrad, oder eine Wähleinrichtung (14; 14a; 14b), vorzugsweise eine Wähleinrichtung vom Klauenkupplungstyp ist.

7. Getriebe umfassend wenigstens eine Antriebswelle (20; 30), wenigstens ein Antriebsrad (13; 23; 33), das an die wenigstens eine Antriebswelle gekoppelt ist, eine Ausgangswelle (10), wenigstens eine Wähleinrichtung (14; 14a; 14b), die an die Ausgangswelle oder die wenigstens eine Antriebswelle gekoppelt ist, und wenigstens ein Getrieberad (11; 12), wobei das wenigstens eine Getrieberad (11; 12) und/oder die wenigstens eine Wähleinrichtung (14; 14a; 14b) Übertragungselemente (3) nach einem der vorhergehenden Ansprüche sind.

8. Getriebe nach Anspruch 7, wobei das wenigstens eine Getrieberad (11; 12) in konstantem Eingriff mit einem Antriebsrad (13) oder mit einem anderen Getrieberad (50) steht.

9. Getriebe nach einem der Ansprüche 7 oder 8, wobei das Antriebsrad (13) ein Kegelritzel ist.

10. Getriebe nach einem der Ansprüche 7 bis 9, wobei die Wähleinrichtung (14) erste Kopplungselemente (140; 141; 142) zum drehenden Koppeln und/oder Entkoppeln mit entsprechenden ersten Kopplungselementen (1121; 1221) des wenigstens einen Getrieberads (11; 12) und/oder zweite Kopplungselemente (144) zum drehenden Koppeln und/oder Entkoppeln mit entsprechenden Kopplungselementen (101) der Ausgangswelle (10) umfasst.

11. Getriebe nach Anspruch 10, wobei die Wähleinrichtung (14) axial oder Schraubenförmig entlang der Achse (2) der Ausgangswelle (10) bewegbar ist, und wobei die schraubenförmige Bewegung entlang der Achse (2) eine Axial- und eine Drehbewegung umfasst,

12. Getriebe nach einem der Ansprüche 7 bis 11, wobei wenigstens ein Sensor zur Messung der Winkelgeschwindigkeit des Antriebsrads (13) und/oder des wenigstens einen Getrieberads (11; 12) und/oder der Ausgangswelle (10) und/oder der Antriebswelle (20) und/oder der Wähleinrichtung (14) innerhalb des Getriebes angeordnet ist.

**Revendications**

1. Elément de transmission d'un système de transmission de puissance (1) destiné à être utilisé dans une boîte de vitesses,

dans lequel l'élément de transmission comprend au moins une première partie (112 ; 122 ; 212), au moins une deuxième partie (111 ; 121 ; 211) qui peut tourner par rapport à au moins une première partie (112 ; 122 ; 212) autour d'un axe commun (2) d'un degré limité, et au moins un premier élément élastique (114 ; 124) ;
dans lequel la au moins une première partie (112 ; 122 ; 212) et la au moins une deuxième partie (111 ; 121; 211) forment conjointement au moins un compartiment dans lequel le au moins un premier élément élastique (114 ; 124) est agencé entre la au moins une première partie (112 ; 122 ; 212) et la au moins une deuxième partie (111; 121; 211) pour solliciter la au moins une première partie (112 ; 122 ; 212) et la au moins une deuxième partie (111 ; 121; 211) s'éloignant en rotation l'un de l'autre dans des sens opposés,
dans lequel l'élément de transmission (3) comprend en outre au moins un deuxième élément élastique (113 ; 113a ; 113b ; 123) disposé à l'intérieur d'au moins un compartiment entre la au moins une première partie (112 ; 122 ; 212) et la au moins une deuxième partie (111 ; 121 ; 211), dans lequel le au moins un deuxième élément élastique (113 ; 113a ; 113b ; 123) est disposé parallèlement à au moins un premier élément élastique (114 ; 124),
et en ce que les éléments élastiques (113, 113a, 113b, 123 ; 114, 124) comportent des taux de suspension différents, dans lequel le premier élément élastique (114 ; 124) comporte un taux de suspension inférieur à celui du deuxième élément élastique (113 ; 113a ; 113b ; 123), dans lequel le premier élément élastique (114 ;

124) est partiellement agencé à l'intérieur du deuxième élément élastique (113 ; 113a ; 113b ; 123), **caractérisé en ce que** le premier élément élastique (114 ; 124) est précontraint.

2. Elément de transmission selon la revendication 1, dans lequel le au moins un deuxième élément élastique (113 ; 113a ; 113b ; 123) sollicite la au moins une première partie (112 ; 122 ; 212) et la au moins une deuxième partie (111; 121; 211) s'écartant en rotation l'une de l'autre dans des sens opposés après que le au moins un premier élément élastique (114 ; 124) est chargé.

3. Elément de transmission selon une quelconque des revendications précédentes, dans lequel le au moins un premier et le au moins un deuxième élément élastique (113 ; 113a ; 113b ; 123) sont des éléments à ressort, ou dans lequel le au moins un premier élément élastique (114 ; 124) est fourni par un élément à ressort et le au moins un deuxième élément élastique (113 ; 113a ; 113b ; 123) est fourni par un élément en caoutchouc.

4. Elément de transmission selon une quelconque des revendications précédentes, dans lequel le au moins un compartiment comprend au moins un élément amortisseur (1141 ; 1141a ; 1141b ; 1241).

5. Elément de transmission selon une quelconque des revendications précédentes, dans lequel au moins une première partie (112 ; 122 ; 212) est agencée au moins partiellement à l'intérieur de la au moins une deuxième partie (111 ; 121 ; 211).

6. Elément de transmission selon une quelconque des revendications précédentes, dans lequel l'élément de transmission (3) est une roue dentée (11 ; 12 ; 13 ; 13a ; 13b ; 50), de préférence une roue conique ou droite, ou un sélecteur (14 ; 14a; 14b), de préférence un sélecteur de type crabot.

7. Boîte de vitesses comprenant au moins un arbre moteur (20 ; 30), au moins une roue motrice (13 ; 23 ; 33) couplée à au moins un arbre moteur, un arbre de sortie (10), au moins un sélecteur (14 ; 14a ; 14b) couplé à l'arbre de sortie ou audit au moins un arbre moteur, et au moins une roue dentée (11 ; 12), dans lequel la au moins une roue dentée (11 ; 12) et/ou le au moins un sélecteur (14 ; 14a ; 14b) sont des éléments de transmission (3) selon une quelconque des revendications précédentes.

8. Boîte de vitesses selon la revendication 7, dans laquelle la au moins une roue dentée (11 ; 12) est en prise permanente avec une roue motrice (13) ou avec une autre roue dentée (50).

9. Boîte de vitesses selon une quelconque des revendications 7 ou 8, dans laquelle la roue motrice (13) est un pignon conique.

10. Boîte de vitesses selon une quelconque des revendications 7 à 9, dans laquelle le sélecteur (14) comprend des premiers éléments d'accouplement (140 ; 141 ; 142) pour s'accoupler et/ou se désaccoupler en rotation avec des premiers éléments d'accouplement correspondants (1121 ; 1221) de la au moins une roue dentée (11 ; 12) et/ou comprend des deuxièmes éléments d'accouplement (144) pour s'accoupler et/ou se désaccoupler en rotation avec des éléments d'accouplement correspondants (101) de l'arbre de sortie (10).

11. Boîte de vitesses selon la revendication 10, dans laquelle le sélecteur (14) est mobile axialement ou hélicoïdalement le long de l'axe (2) de l'arbre de sortie (10), et dans laquelle le mouvement hélicoïdal le long de l'axe (2) comprend un mouvement axial et un mouvement de rotation.

12. Boîte de vitesses selon une quelconque des revendications 7 à 11, dans laquelle au moins un capteur de mesure de la vitesse angulaire de la roue motrice (13) et/ou de la au moins une roue dentée (11; 12) et/ou de l'arbre de sortie (10) et/ou l'arbre moteur (20) et/ou le sélecteur (14) est disposé à l'intérieur de la boîte de vitesses.

Fig. 1

Fig. 2

3

11

113

111

1121

112

1141    1122    114    1112

Fig. 3

3

11

111

1112b

1112a

113a

111

1122b

1141b

1141a

1122a

112

1121    113b    114

1112a

Fig. 4

Fig. 5

Fig. 6

Fig. 7

Fig. 8A

Fig. 8B

Fig. 8C

Fig. 8D

Fig. 8E

Fig. 8F

Fig. 8G

Fig. 9

Fig. 10

Fig. 11

Fig. 12

Fig. 13

Fig. 14

Fig. 15

**REFERENCES CITED IN THE DESCRIPTION**

**Patent documents cited in the description**

- WO 2008062192 A1
- WO 2015010187 A1
- EP 3660352 A1